# EUROPEAN PATENT APPLICATION

(11) **EP 4 117 330 A1**
(43) Date of publication of application: **11.01.2023**
(21) Application number: 20922739.6
(22) Date of filing: 16.11.2020
(51) Int. Cl.: H04W 16/18

(54) **METHOD AND APPARATUS FOR OPTIMIZING COVERAGE OF MILLIMETER WAVE SYSTEM, ELECTRONIC DEVICE AND STORAGE MEDIUM**

(30) Priority: 02.03.2020 CN 202010137714
(71) Applicant: ZTE Corporation, Shenzhen, Guangdong 518057 (CN)
(72) Inventor: LIU, Ming, Shenzhen, Guangdong 518057 (CN)
(74) Representative: Petraz, Gilberto Luigi
(86) International application number: PCT/CN2020/129062
(87) International publication number: WO 2021/174908

(57) **Abstract**

Disclosed in the present disclosure are a method and an apparatus for optimizing coverage of a millimeter wave system, an electronic device and a storage medium. The method includes: counting energy optimization values of received optimal beams from all UEs in a cell under all codebooks to obtain a set of energy optimization values under all the codebooks; selecting an optimal energy optimization value from the set of the energy optimization values according to a preset optimal selection policy; and determining a codebook corresponding to the optimal energy optimization value as an optimal codebook in a current scenario. In the embodiments of the present disclosure, the optimal codebook suitable for the current scenario may be screened. The optimal codebook may be used to increase cell capacity, such that the cell may provide better access and services and better signal coverage for the UEs, and more UEs may be covered to enhance the service performance of the UEs, thereby improving user experience. The technology provided in the present embodiments may be used for the configuration of beam codebooks in different scenarios, and may affect the coverage performance and the service performance in different scenarios.

## Description

### CROSS-REFERENCE TO RELATED APPLICATIONS

The present disclosure claims the priority of Chinese patent application CN202010137714.2, filed on March 2, 2020 and entitled "method and apparatus for optimizing coverage of millimeter wave system, and electronic device and storage medium", which is incorporated herein by reference in its entirety.

### FIELD OF THE INVENTION

The present disclosure relates to the technical field of mobile communication, and in particular, to a method and an apparatus for optimizing coverage of a millimeter wave system, an electronic device and a storage medium.

### BACKGROUND OF THE INVENTION

At present, 5G (Fifth generation) technology is increasingly developing. The powerful capability and rich connection scenarios of 5G will inevitably stimulate application requirements of all trades and professions.

In some implementations, hybird analog forming is adopted for a beam for an air interface in a 5G millimeter wave (mmWAVE) system, and beam enabling of different directions are provided by loading different codebooks in an AAU (active antenna unit), so as to result in coverage gain.

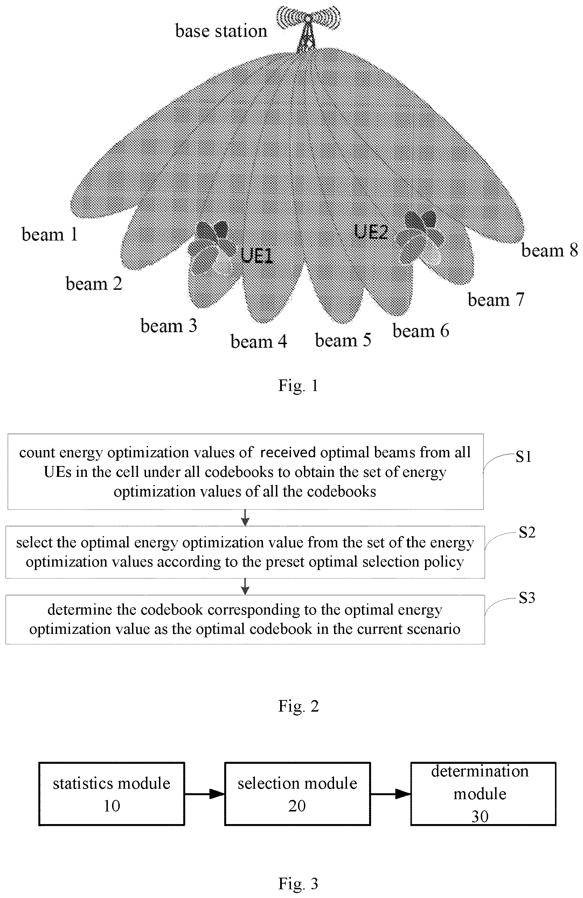

As shown in Fig. 1, a beam has the following characteristics of: (1) a larger and finer range of coverage in a case of a greater number of beams of codebook; and (2) a higher requirement on processing capabilities of software and hardware of a device and a longer time for beam round sweeping and pairing, in a case of a greater number of beams of codebook.

Different beams are generated under different codebooks. Completely different coverage will be generated by adopting different beam codebooks in a same wireless environment, and signal coverage and service performance of UEs at a same position greatly vary. The selection and optimization of codebooks are vital issues for millimeter wave system testing and networking coverage.

At present, a tester manually selects and loads a codebook to an AAU by estimating wireless environment coverage. Moreover, a UE is manually placed at a position in a direction directly facing the AAU, so as to enable the UE substantially being within the coverage of a main lobe of the beam. After communication systems are commercialized, the number of UEs increases and is randomly distributed, or a UE may move to another position. A UE is prone to be within the coverage of a side lobe of the beam, thereby resulting in weak coverage, which causes poor signal reception, poor performance and poor user experience of the UE.

### SUMMARY OF THE INVENTION

In view of this, the embodiments of the present disclosure provide a method and an apparatus for optimizing coverage of a millimeter wave system, and an electronic device and a storage medium.

The technical solution used by the present disclosure for solving the above technical problems is as follows.

According to one aspect of the embodiments of the present disclosure, a method for optimizing coverage of a millimeter wave system is provided, and the method includes: counting energy optimization values of received optimal beams from all UEs in a cell under all codebooks to obtain a set of energy optimization values of all the codebooks; selecting an optimal energy optimization value from the set of the energy optimization values according to a preset optimal selection policy; and determining a codebook corresponding to the optimal energy optimization value as an optimal codebook in a current scenario.

According to another aspect of the embodiments of the present disclosure, an apparatus for optimizing coverage of a millimeter wave system is provided. The apparatus is applied to the method for optimizing coverage of a millimeter wave system according to the embodiments of the present disclosure, and the apparatus includes: a statistics module, a selection module and a determination module. The statistics module is configured to count energy optimization values of received optimal beams from all UEs in the cell under all codebooks to obtain a set of energy optimization values of all the codebooks. The selection module is configured to select an optimal energy optimization value from the set of the energy optimization values according to a preset optimal selection policy. The determination module is configured to determine a codebook corresponding to the optimal energy optimization value as an optimal codebook in a current scenario.

According to another aspect of the embodiments of the present disclosure, an electronic device is provided, and the electronic device includes: a memory, a processor and a computer program stored in the memory and executed on the processor. When the computer program is executed by the processor, the step of the method for optimizing coverage of a millimeter wave system provided in the embodiments of the present disclosure is implemented.

According to another aspect of the embodiments of the present disclosure, a computer-readable storage medium is provided. The storage medium stores a program for the method for optimizing coverage of a millimeter wave system, and when the program for the method for optimizing coverage of a millimeter wave system is executed by a processor, the step of the method for optimizing coverage of a millimeter wave system provided in the embodiments of the present disclosure is implemented.

### BRIEF DESCRIPTION OF THE DRAWINGS

Fig. 1 is a schematic diagram illustrating coverage of millimeter wave beams provided in an embodiment of the present disclosure;
Fig. 2 is a schematic flowchart of a method for optimizing coverage of a millimeter wave system provided in an embodiment of the present disclosure;
Fig. 3 is a schematic diagram of a structure of an apparatus for optimizing coverage of a millimeter wave system provided in an embodiment of the present disclosure;
Fig. 4 is a schematic flowchart of a method for optimizing coverage of a millimeter wave system provided in an embodiment of the present disclosure;
Fig. 5 is a schematic flowchart of another method for optimizing coverage of a millimeter wave system provided in an embodiment of the present disclosure; and
Fig. 6 is a schematic diagram of a structure of an electronic device provided in an embodiment of the present disclosure.

The achievement of objectives, the functional features and the advantages of the present disclosure will be further described with reference to the accompanying drawings in combination with the embodiments.

### DETAILED DESCRIPTION OF THE EMBODIMENTS

In order to make the technical problems to be solved, and technical solutions and beneficial effects of the present disclosure clear and comprehensible, the present disclosure is further described in detail below in combination with the accompanying drawings and the embodiments. It should be noted that, the embodiments described herein are merely illustrative of the present disclosure and are not intended to limit the present disclosure.

In the subsequent description, postfixes, such as "module", "part" or "unit" for representing elements are used merely for facilitating the description of the present disclosure, and themselves do not have specified meanings. Therefore, "module", "part" or "unit" may be used in a mixed manner.

It should be noted that, the terms "first", "second", and the like in the description and in the claims of the present disclosure as well as the above accompanying drawings are used to distinguish similar objects, and are not necessarily used to describe a specific order or a precedence order.

The present disclosure provides a solution for optimizing codebooks in a millimeter wave system in order to increase coverage. The solution may be used for the configuration of beam codebooks in a 5G millimeter wave system in different scenarios, and may affect the coverage performance and the service performance in the different scenarios.

In an embodiment, as shown in Fig. 2, the present disclosure provides a method for optimizing coverage of a millimeter wave system, and the method includes: S1, counting energy optimization values of received optimal beams from all UEs in a cell under all codebooks to obtain a set of energy optimization values under all the codebooks; S2, selecting an optimal energy optimization value from the set of energy optimization values according to a preset optimal selection policy; and S3, determining a codebook corresponding to the optimal energy optimization value as an optimal codebook in a current scenario.

In some implementations, a user equipment UE generally refers to a user equipment in a 5G millimeter wave system.

In the embodiment, by counting the energy optimization values of the received optimal beams from all the UEs in the cell under all the codebooks to form the set of energy optimization values under all the codebooks and by selecting the optimal energy optimization value from the set of the energy optimization values according to a preset optimal selection policy, the optimal codebook suitable for the current scenario may be screened. The optimal codebook may be used to increase cell capacity, such that the cell may provide better access and services and better signal coverage for the UEs, and more UEs may be covered to enhance the service performance of the UEs, thereby improving user experience. The technology provided in the embodiment may be used for the configuration of beam codebooks in different scenarios, and may affect the coverage performance and the service performance in the different scenarios. Considering the actual application scenarios of cell coverage and user distribution after communication systems are commercialized, a beam codebook conforming to the current UE distribution is selected and loaded according to UE distribution, thereby enhancing the overall coverage and the performance of a network.

In an embodiment, the energy optimization value is an energy accumulated value. At the S1, the step of counting the energy optimization values of the received optimal beams from all the UEs in the cell under all the codebooks to obtain the set of energy optimization values under all the codebooks, includes: counting energy accumulated values of the received optimal beams from all the UEs in the cell under all the codebooks to obtain a set of energy accumulated values of all the codebooks.

In an embodiment, the energy optimization value is an energy average value. At the S1, the step of counting the energy optimization values of the received optimal beams from all the UEs in the cell under all the codebooks to obtain the set of energy optimization values under all the codebooks, includes: counting energy average values of the received optimal beams from all the UEs in the cell under all the codebooks to obtain a set of energy average values of all the codebooks.

In an embodiment, at the S1, the step of counting the energy optimization values of the received optimal beams from all the UEs in the cell under all the codebooks to obtain the set of energy optimization values under all the codebooks, includes: S11, counting the number of codebooks to obtain the number N of codebooks; S12, counting RSRP (Reference Signal Receiving Power) energy optimization values R of the received optimal beams from all the UEs in the cell under one codebook; S13, judging whether all the codebooks have been loaded, and proceeding to step S15 if N - 1 = 0 which indicates that all the codebooks have been loaded, or otherwise, proceeding to step S14; S14, updating the value of N so that N = N - 1, loading a next codebook, and proceeding to step S12; and S15, obtaining a set of RSRP energy optimization values of the codebooks, the set being represented by an array (R1, R2, ..., Rn) and the value of number n in the array being determined according to the number N of codebooks of a system, n = N.

In some implementations, at the S12, the step of counting the RSRP energy optimization values R of the received optimal beams from all the UEs in the cell under one codebook, includes: S121, loading a codebook and starting timing by a codebook timer t; S122, counting by a base station the RSRP energy optimization values R of the received optimal beams from all the UEs during a beam pairing process, a greater value of R indicating a greater number of UEs that may be accessed under the current beam codebook or indicating stronger energy; S123, setting the codebook timer t to be 0 when the timing of the codebook timer reaches a codebook timer duration, that is, the codebook timer duration of the codebook timer t = f, and storing the RSRP energy optimization values R. The f is the codebook timer duration with four unit options of second, minute, hour and day, and may be set according to requirements. The greater the value of f is, the more accurate the collected data is and the longer the time for traversing all the codebooks is.

In some implementations, the energy optimization value is an energy accumulated value. A set of RSRP energy accumulated values (R1, R2, ..., Rn) under the codebooks is obtained according to the method in the above embodiment.

In some implementations, the energy optimization value is an energy average value. A set of RSRP energy average values (R1, R2, ..., Rn) under the codebooks is obtained according to the method in the above embodiment.

In the embodiment, the number of the codebooks is counted, the codebook is then selected, the codebook timer t is started, the energy optimization values of the received optimal beams from all the UEs during the beam pairing process is counted and accumulated by the base station and is stopped after the timer is set to zero, so as to obtain the energy optimization values of the received optimal beams from all the UEs in the cell under the codebook. A set of energy optimization values of all the codebooks is obtained until the energy optimization values of the received optimal beams from all the UEs in the cell under all the codebooks are counted, such that an optimal energy optimization value may be selected from the set of the energy optimization values according to a preset optimal selection policy, and an optimal codebook suitable for the current scenario is screened. The optimal codebook may be used to increase cell capacity, such that the cell may provide better access and services and better signal coverage for the UEs, and more UEs may be covered to enhance the service performance of the UEs, thereby improving user experience. The technology provided in the embodiment may be used for the configuration of beam codebooks in different scenarios, and may affect the coverage performance and the service performance in the different scenarios. Considering actual application scenarios of cell coverage and user distribution after communication systems are commercialized, a beam codebook conforming to the current UE distribution is selected and loaded according to UE distribution, thereby enhancing the overall coverage and the performance of a network.

In an embodiment, at the S2, the preset optimal selection policy is a maximum value selection policy. The step of selecting an optimal energy optimization value from the set of energy optimization values according to a preset optimal selection policy, includes: comparing the energy optimization values in the set of the energy optimization values, and selecting a maximum energy optimization value as the optimal energy optimization value.

In the embodiment, the energy optimization values of the received optimal beams from all the UEs in the cell under all the codebooks are counted so as to form a set of energy optimization values of all the codebooks, and are compared so as to select the maximum energy optimization value as the optimal energy optimization value, such that the optimal codebook that corresponds to the optimal energy optimization value and is suitable for the current scenario may be screened. The optimal codebook may be used to increase cell capacity, such that the cell may provide better access and services and better signal coverage for the UEs, and more UEs may be covered to enhance the service performance of the UEs, thereby improving user experience. The technology provided in the embodiment may be used for the configuration of beam codebooks in different scenarios, and may affect the coverage performance and the service performance in the different scenarios. Considering the actual application scenarios of cell coverage and user distribution after communication systems are commercialized, a beam codebook conforming to the current UE distribution is selected and loaded according to UE distribution, thereby enhancing the overall coverage and the performance of a network.

In an embodiment, the method further includes: loading a determined optimal codebook to the AAU system for running.

In some implementations, the AAU (active antenna unit) system is a 5G millimeter wave system integrated with devices or modules for signal processing and radio frequency input and output.

In the embodiment, the determined optimal codebook is loaded to the AAU system for running to increase the cell capacity, such that the cell may provide better access and services and better signal coverage for the UEs, and more UEs may be covered to enhance the service performance of the UEs, thereby improving user experience. The technology provided in the present embodiments may be used for the configuration of the beam codebooks in different scenarios, and may affect the coverage performance and the service performance in the different scenarios.

In an embodiment, as shown in Fig. 3, the present disclosure provides an apparatus for optimizing coverage of a millimeter wave system, and the apparatus includes: a statistics module 10, a selection module 20 and a determination module 30.

The statistics module 10 is configured to count energy optimization values of received optimal beams from all UEs in a cell under all codebooks to obtain a set of energy optimization values of all the codebooks.

The selection module 20 is configured to select an optimal energy optimization value from the set of the energy optimization values according to a preset optimal selection policy.

The determination module 30 is configured to determine the codebook corresponding to the optimal energy optimization value as the optimal codebook in a current scenario.

In some implementations, a user equipment UE generally refers to a user equipment in a 5G millimeter wave system.

In the embodiment, by counting the energy optimization values of the received optimal beams from all the UEs in the cell under all the codebooks to form the set of energy optimization values of all the codebooks and by selecting the optimal energy optimization value from the set of the energy optimization values according to a preset optimal selection policy, the optimal codebook suitable for the current scenario may be screened. The optimal codebook may be used to increase cell capacity, such that the cell may provide better access and services and better signal coverage for the UEs, and more UEs may be covered to enhance the service performance of the UEs, thereby improving user experience. The technology provided in the embodiment may be used for the configuration of beam codebooks in different scenarios, and may affect the coverage performance and the service performance in the different scenarios. Considering the actual application scenarios of cell coverage and user distribution after communication systems are commercialized, and a beam codebook conforming to the current UE distribution is selected and loaded according to UE distribution, thereby enhancing the overall coverage and the performance of a network.

In an embodiment, the energy optimization value is an energy accumulated value. The statistics module 10 is specifically configured for: counting energy accumulated values of the received optimal beams from all the UEs in the cell under all the codebooks to obtain a set of energy accumulated values of all the codebooks.

In an embodiment, the energy optimization value is an energy average value. The statistics module 10 is specifically configured for: counting energy average values of the received optimal beams from all the UEs in the cell under all the codebooks to obtain a set of energy average values of all the codebooks.

In an embodiment, the statistics module 10 is specifically configured for: S11, counting the number of codebooks to obtain the number N of codebooks; S12, counting RSRP energy optimization values R of the received optimal beams from all the UEs that in the cell under one codebook; S13, judging whether all the codebooks have been loaded, and proceeding to step S15 if N - 1 = 0 which indicates that all the codebooks have been loaded, or otherwise, proceeding to step S14; S14, updating the value of N so that N = N - 1, loading a next codebook, and proceeding to step S12; and S15, obtaining a set of RSRP energy optimization values of the codebooks, the set being represented by an array (R1, R2, ..., Rn) and the value of number n in the array being determined according to the number N of codebooks of a system, n = N.

In some implementations, at the S12, the counting the RSRP energy optimization values of the received optimal beams from all the UEs in the cell under one codebook, includes: S121, loading a codebook and starting timing by a codebook timer t; S122, counting by a base station the RSRP energy optimization values R of the received optimal beams from all the UEs during a beam pairing process, a greater value of R indicating a greater number of UEs that may be accessed under the current beam codebook or indicating stronger energy; and S123, setting the codebook timer t to be 0 when the timing of the codebook timer reaches a codebook timer duration, that is, the codebook timer duration of the codebook timer t = f and storing the RSRP energy optimization values R. The f is the codebook timer duration with four unit options of second, minute, hour and day, and may be set according to requirements. The greater the value of f is, the more accurate the collected data is and the longer the time for traversing all the codebooks is.

In the embodiment, the number of the codebooks is counted, the codebook is then selected, the codebook timer t is started, the energy optimization values of the received optimal beams from all the UEs during the beam pairing process is counted and accumulated by the base station and is stopped after the timer is set to zero, so as to obtain the energy optimization values of the received optimal beams from all the UEs in the cell under the codebook. A set of energy optimization values of all the codebooks is obtained until the energy optimization values of the received optimal beams from all the UEs in the cell under all the codebooks are counted, such that an optimal energy optimization value may be selected from the set of the energy optimization values according to a preset optimal selection policy, and an optimal codebook suitable for the current scenario is screened. The optimal codebook may be used to increase cell capacity, such that the cell may provide better access and services and better signal coverage for the UEs, and more UEs may be covered to enhance the service performance of the UEs, thereby improving user experience. The technology provided in the present embodiments may be used for the configuration of beam codebooks in different scenarios, and may affect the coverage performance and service performance in the different scenarios.

In an embodiment, the preset optimal selection policy is a maximum value selection policy, and the selection module 20 is specifically configured for: comparing the energy optimization values in the set of the energy optimization values and selecting the maximum energy optimization value as the optimal energy optimization value.

In the embodiment, the energy optimization values of the received optimal beams from all the UEs in the cell under all the codebooks are counted to form a set of energy optimization values of all the codebooks, and are compared to select the maximum energy optimization value as the optimal energy optimization value, such that the optimal codebook that corresponds to the optimal energy optimization value and is suitable for the current scenario may be screened. The optimal codebook may be used to increase cell capacity, such that the cell may provide better access and services and better signal coverage for the UEs, and more UEs may be covered to enhance the service performance of the UEs, thereby improving the user experience. The technology provided in the present embodiments may be used for the configuration of beam codebooks in different scenarios, and may affect the coverage performance and service performance in the different scenarios.

In an embodiment, the apparatus further includes: a loading module configured for loading the determined optimal codebook to the AAU system for running.

In some implementations, the AAU system is a 5G millimeter wave system integrated with devices or modules for signal processing and radio frequency input and output.

In the embodiment, the determined optimal codebook is loaded to the AAU system for running to increase the cell capacity, such that the cell may provide better access and services and better signal coverage for the UEs, and more UEs may be covered to enhance the service performance of the UEs, thereby improving user experience. The technology provided in the embodiment may be used for the configuration of the beam codebooks in different scenarios, and may affect the coverage performance and the service performance in the different scenarios. Considering the actual application scenarios of cell coverage and user distribution after communication systems are commercialized, a beam codebook conforming to the current UE distribution is selected and loaded according to UE distribution, thereby enhancing the overall coverage and the performance of a network.

It should be noted that, the above embodiments of the apparatus falls within the same concept as the embodiments of the method, the specific implementation process of the apparatus is detailed in the embodiments of the method, and all the technical features in the embodiments of the method are correspondingly applicable in the embodiments of the apparatus, which will not be described herein.

The technical solution of the present disclosure will be further described below in combination with the specific embodiments and the accompanying drawings.

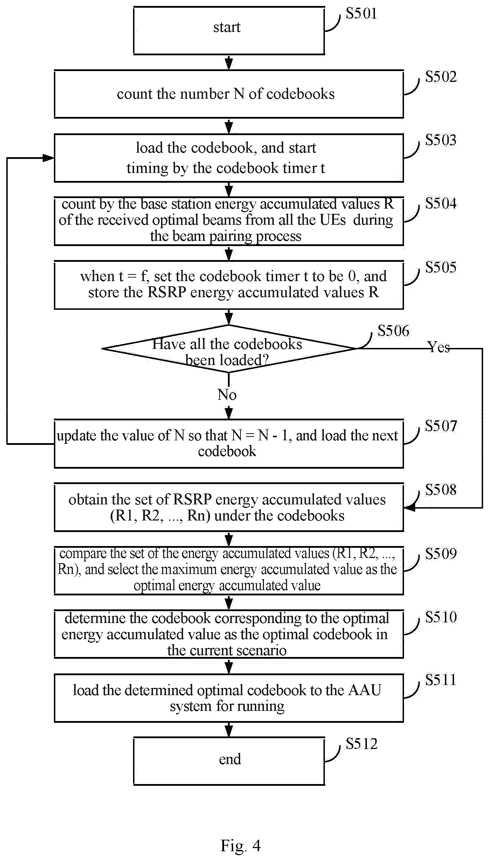

In an embodiment, as shown in Fig. 4, the present disclosure provides a method for optimizing coverage of a millimeter wave system. In the embodiment, the energy optimization value is described by taking an energy accumulated value as an example.

The present disclosure provides a method for optimizing the coverage of a millimeter wave system, and the method includes the steps S501 to S512.

At S501, a flow is started.

At S502, the number of codebooks is counted to obtain the number N of the codebooks.

At S503, a codebook is loaded, a codebook timer t starts timing, and it proceeds to step S504.

At S504, energy accumulated values R of received optimal beams from all UEs during a beam pairing process are counted by a base station. A greater value of R indicates a greater number of UEs that may be accessed under the current beam codebook or stronger energy. Then it proceeds to step S505.

At S505, when the timing of the codebook timer reaches a codebook timer duration, that is, the codebook timer duration of the codebook timer t = f, the codebook timer t is set to be 0, and the RSRP energy accumulated values R are stored. The f is the codebook timer duration with four unit options of second, minute, hour and day, and may be set according to requirements. The greater the value of f is, the more accurate the collected data is and the longer the time for traversing all the codebooks is. Then it proceeds to step S506.

At S506, whether all the codebooks have been loaded (if N - 1 = 0) is judged. In a case of N - 1 = 0, it indicates that all the codebooks have been loaded, and proceeds to step S508, or otherwise proceeds to step S507.

At S507, the value of N is updated so that N = N - 1, a next codebook is loaded, and it proceeds to step S503.

At S508, a set of RSRP energy accumulated values under the codebooks are obtained. The set is represented by an array (R1, R2, ..., Rn), and the value of n in the array is determined according to the number N of codebooks of the system, n = N. Then it proceeds to step S509.

At S509, the set of the energy accumulated values (R1, R2, ..., Rn) are compared, and the maximum energy accumulated value are selected from the set of the energy accumulated values as an optimal energy accumulated value, and it proceeds to step S510.

At S510, a codebook corresponding to the optimal energy accumulated value is determined as the optimal codebook in the current scenario, and it proceeds to step S511.

At S511, a determined optimal codebook is loaded to an AAU system for running, and it proceeds to step S512.

At S512, the flow is ended.

In the embodiment, the number of the codebooks is counted, the codebook is then selected, the codebook timer t is started, the energy accumulated values of the received optimal beams from all the UEs during the beam pairing process is counted by the base station and is stopped after the timer is set to zero, so as to obtain the energy accumulated values of the received optimal beams from all the UEs in the cell under the codebook. A set of energy accumulated values of all the codebooks is obtained until the energy accumulated values of the received optimal beams from all the UEs in the cell under all the codebooks are counted, such that an optimal energy accumulated value may be selected from the set of the energy accumulated values according to a preset optimal selection policy, and a codebook corresponding to the optimal energy accumulated value is determined as the optimal codebook suitable for the current scenario. The optimal codebook may used to increase cell capacity, such that the cell may provide better access and services and better signal coverage for the UEs, and more UEs may be covered to enhance the service performance of the UEs, thereby improving the user experience. The technology provided in the embodiment may be used for the configuration of beam codebooks in different scenarios, and may affect the coverage performance and the service performance in the different scenarios. Considering the actual application scenarios of cell coverage and user distribution after communication systems are commercialized, a beam codebook conforming to the current UE distribution is selected and loaded according to UE distribution, thereby enhancing the overall coverage and the performance of a network.

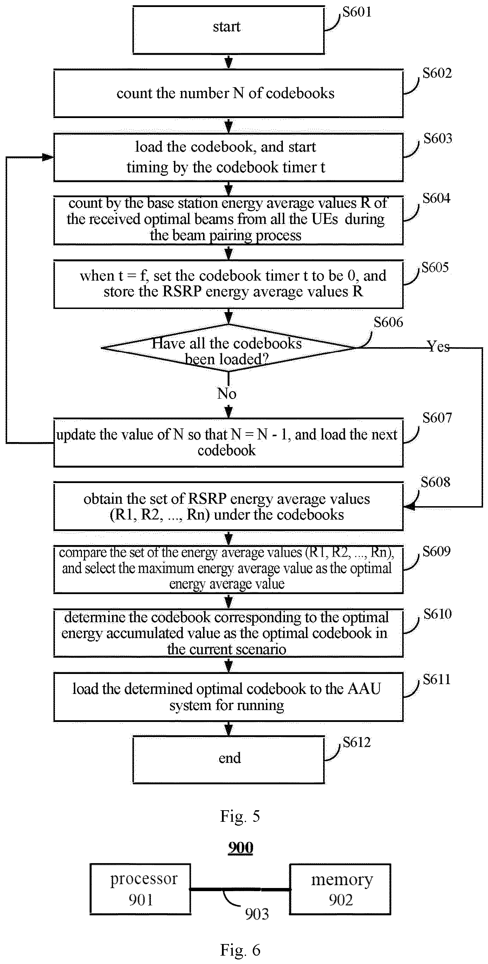

In an embodiment, as shown in Fig. 5, the present disclosure provides a method for optimizing coverage of a millimeter wave system. In the embodiment, the energy optimization value is described by taking an energy average value as an example.

The present disclosure provides a method for optimizing coverage of a millimeter wave system is provided, and the method includes the steps S601 to S612.

At S601, a flow is started.

At S602, the number of codebooks is counted to obtain the number N of the codebooks.

At S603, a codebook is loaded, a codebook timer t starts timing, and it proceeds to Step 604.

At S604, energy average values R of received optimal beams from all UEs during a beam pairing process are counted by a base station. A greater value of R indicates a greater number of UEs that may be accessed under the current beam codebook or stronger energy. Then it proceeds to step S605.

At S605, when the timing of the codebook timer reaches a codebook timer duration, that is, the codebook timer duration of the codebook timer t = f, the codebook timer t is set to be 0, and the RSRP energy average values R are stored. The f is the codebook timer duration with four unit options of second, minute, hour and day, and may be set according to requirements. The greater the value of f is, the more accurate the collected data is and the longer the time for traversing all the codebooks is. Then it proceeds to step S606.

At S606, whether all the codebooks have been loaded (if N - 1 = 0) is judged. In a case of N - 1 = 0, it indicates that all the codebooks have been loaded, and proceeds to step S608, or otherwise proceeds to step S607.

At S607, the value of N is updated so that N = N - 1, a next codebook is loaded, and it proceeds to step S603.

At S608, a set of RSRP energy average values under the codebooks is obtained. The set is represented by an array (R1, R2, ..., Rn), and the value of n in the array is determined according to the number N of codebooks of the system, n = N. Then it proceeds to step S609.

At S609, the set of the energy average values (R1, R2, ..., Rn) is compared, and the maximum energy average value is selected from the set of the energy average values as an optimal energy average value, and it proceeds to step S610.

At S610, a codebook corresponding to the optimal energy average value is determined as the optimal codebook in the current scenario, and it proceeds to step S611.

At S611, a determined optimal codebook is loaded to an AAU system for running, and it proceeds to step S612.

At S612, the flow is ended.

In the embodiment, the number of the codebooks is counted, the codebook is then selected, the codebook timer t is started, the energy average values of the received optimal beams from all the UEs during the beam pairing process is counted by the base station and is stopped after the timer is set to zero, so as to obtain the energy average values of the received optimal beams from all the UEs in the cell under the codebook. A set of energy average values of all the codebooks is obtained until the energy average values of the received optimal beams from all the UEs in the cell under all the codebooks are counted, such that an optimal energy average value may be selected from the set of the energy average values according to a preset optimal selection policy, and an optimal codebook suitable for the current scenario is screened. The optimal codebook may used to increase cell capacity, such that the cell may provide better access and services and better signal coverage for the UEs, and more UEs may be covered to enhance the service performance of the UEs, thereby improving the user experience. The technology provided in the embodiment may be used for the configuration of the beam codebooks in different scenarios, and may affect the coverage performance and the service performance in the different scenarios. Considering the actual application scenarios of cell coverage and user distribution after communication systems are put into commercial use are commercialized, a beam codebook conforming to the current UE distribution is selected and loaded according to terminal UE distribution, thereby enhancing the overall coverage and the performance of a network.

In addition, the embodiments of the present disclosure further provide an electronic device. As shown in Fig. 6, the electronic device 900 includes: a memory 902, a processor 901 and one or more computer programs stored in the memory 902 and executed on the processor 901. The memory 902 and the processor 901 are coupled to each other via a bus system 903, and the one or more computer programs is executed by the processor 901 to implement the following steps of the method for optimizing the coverage of a millimeter wave system provided in the embodiments of the present disclosure.

At S1, energy optimization values of received optimal beams from all UEs in a cell under all codebooks are counted to obtain a set of energy optimization values of all the codebooks.

At S2, an optimal energy optimization value is selected from the set of the energy optimization values according to a preset optimal selection policy.

At S3, the codebook corresponding to the optimal energy optimization value is determined as the optimal codebook in a current scenario.

The method disclosed in the above embodiments of the present disclosure may be applied to the processor 901, or be implemented by processor 901. The processor 901 may be an integrated circuit chip having a signal processing capability. In an implementation process, the steps of the above method may be implemented by a hardware integrated logic circuit or by an instruction in the form of software in the processor 901. The processor 901 may be a general purpose processor, a DSP, or other programmable logic devices, discrete gates, or a transistor logic device, a discrete hardware component, etc. The processor 901 may implement or execute methods, steps and logic diagrams disclosed in the embodiments of the present disclosure. The general processor may be a microprocessor or any conventional processor, etc. The steps of the method disclosed in combination with the embodiments of the present disclosure may be directly embodied as being executed by a hardware decoding processor, or executed by a combination of hardware and software modules in the decoding processor. The software modules may be located in a storage medium, the storage medium is located in the memory 902, and the processor 901 reads information in the memory 902 and completes the steps of the described method in combination with hardware thereof.

It can be understood that, the memory 902 in the embodiments of the present disclosure may be a volatile memory or a non-volatile memory, and may alternatively include both a volatile memory and a non-volatile memory. The non-volatile memory may be a read-only memory (ROM), a programmable read-only memory (PROM), an erasable read-only memory (EPROM), an electrically erasable programmable read-only memory (EEPROM), a ferromagnetic random access memory (FRAM), a flash memory or other memory technology, a compact disk read-only memory (CD-ROM), a digital video disk (DVD) or other optical storage, magnetic cassettes, magnetic tape, magnetic disk storage or other magnetic storage apparatuses. The volatile memory may be a random access memory (RAM), and by way of illustration but not limitation, many forms of RAM may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM) and a direct rambus random access memory (DRRAM). The memory described in the embodiments of the present disclosure is intended to include, but not limited to, these and any other suitable types of memories.

It should be noted that, the above embodiments of the electronic device falls within the same concept as the embodiments of the method, the specific implementation processes thereof is detailed in the embodiments of the method, and all the technical features in the embodiments of the method are correspondingly applicable in the embodiments of the electronic device, which will not be described herein.

In addition, in an exemplary embodiment, the embodiment of the present disclosure further provides a computer storage medium, and in particular a computer-readable storage medium, for example, the memory 902 storing a computer program. The computer storage medium stores one or more programs for a method for optimizing the coverage of a millimeter wave system, and when the one or more programs for the method for optimizing the coverage of a millimeter wave system is executed by the processor 901, the following steps of the method for optimizing the coverage of a millimeter wave system provided in the embodiments of the present disclosure are implemented.

At S1, energy optimization values of received optimal beams from all UEs in a cell under all codebooks are counted so as to obtain a set of energy optimization values of all the codebooks.

At S2, an optimal energy optimization value is selected from the set of the energy optimization values according to a preset optimal selection policy.

At S3, the codebook corresponding to the optimal energy optimization value is determined as the optimal codebook in a current scenario.

It should be noted that, the embodiment of the program for a method for optimizing the coverage of a millimeter wave system on the computer-readable storage medium falls within the same concept as the embodiments of the method, the specific implementation processes thereof is detailed in the embodiments of the method, and all the technical features in the embodiments of the method are correspondingly applicable in the embodiments of the computer-readable storage medium, which will not be described herein.

Compared with related art, the embodiments of the present disclosure provide a method and an apparatus for optimizing the coverage of a millimeter wave system, and an electronic device and a storage medium. The method includes: counting energy optimization values of received optimal beams from all UEs in a cell under all codebooks, so as to obtain a set of energy optimization values under all the codebooks; selecting an optimal energy optimization value from the set of the energy optimization values according to a preset optimal selection policy; and determining the codebook corresponding to the optimal energy optimization value as the optimal codebook in a current scenario. In the embodiment, by counting the energy optimization values of the received optimal beams from all the UEs in the cell under all the codebooks to form a set of energy optimization values of all the codebooks and by selecting the optimal energy optimization value is selected from the set of the energy optimization values according to a preset optimal selection policy, the optimal codebook suitable for the current scenario may be screened. The optimal codebook may be used to increase cell capacity, such that the cell may provide better access and services and better signal coverage for the UEs, and more UEs may be covered to enhance the service performance of the UEs, thereby improving the user experience. The technology provided in the embodiment may be used for the configuration of beam codebooks in different scenarios, and may affect the coverage performance and the service performance in the different scenarios. Considering the actual application scenarios of cell coverage and user distribution after communication systems are commercialized, and a beam codebook conforming to the current UE distribution is selected and loaded according to UE distribution, thereby enhancing the overall coverage and the performance of a network.

It should be noted that, the terms "comprise", "include", or any other variant thereof herein are intended to encompass a non-exclusive inclusion, such that a process, method, article, or device that includes a series of elements not only comprises those elements, but also comprises other elements not explicitly listed, or elements that are inherent to such a process, method, article, or device. In the absence of more restrictions, the element defined by the phrase "comprising a/an ..." does not exclude the presence of a further identical element in the process, method, article or device that includes the element.

The serial numbers of the embodiments of the present disclosure are only for description, and do not represent the superiority or inferiority of the embodiments.

Through the description of the foregoing embodiments, those skilled in the art can clearly understand that the method of the above embodiments can be implemented by software combined with a necessary universal hardware platform, and certainly, can also be implemented by hardware, but in many cases, the former is a better implementation. On the basis of such understanding, the technical solution of the present disclosure, in essence, or its contribution to the prior art may be embodied in the form of a software product. The computer software product is stored in a storage medium (for example, an ROM/RAM, a magnetic disk and an optical disk), and includes several instructions used to cause a terminal (which may be a mobile phone, a computer, a server, an air conditioner or a network device, etc.) to execute the method in the embodiments of the present disclosure.

The embodiments of the present disclosure are described above with reference to the accompanying drawings. However, the present disclosure is not limited to the implementations above. The implementations above are merely illustrative rather than limitative. In light of the teachings of the present disclosure, those skilled in the art may further use various forms without departing from the spirit of the present disclosure and the scope of protection of the claims, and these forms all fall within the scope of protection of the present disclosure.

## Claims

1. A method for optimizing coverage of a millimeter wave system, comprising:
counting energy optimization values of received optimal beams from all UEs in a cell under all codebooks to obtain a set of energy optimization values under all the codebooks;
selecting an optimal energy optimization value from the set of the energy optimization values according to a preset optimal selection policy; and
determining a codebook corresponding to the optimal energy optimization value as an optimal codebook in a current scenario.

2. The method according to claim 1, wherein
the counting energy optimization values of received optimal beams from all UEs in a cell under all codebooks obtain a set of energy optimization values of all the codebooks, comprises:
counting the number of codebooks to obtain the number N of codebooks;
counting energy optimization values R of the received optimal beams from all the UEs in the cell under one codebook; and
judging whether all the codebook have been loaded.
if a codebook having not been loaded exists, loading a next codebook, and returning to the step of counting energy optimization values of the received optimal beams from all the UEs in the cell under one codebook; and
if all the codebooks have been loaded, obtaining the set of energy optimization values (R1, R2, ..., Rn) of all the codebooks, wherein n = N.

3. The method according to claim 2, wherein
the counting energy optimization values of the received optimal beams from all the UEs in the cell under one codebook, comprises:
loading the codebook, and starting timing by a codebook timer t;
counting, by a base station, the energy optimization values R of the received optimal beams from all the UEs during a beam pairing process; and
setting the codebook timer t to be 0 and storing the energy optimization values R when a timing of the codebook timer reaches a codebook timer duration.

4. The method according to claim 1, wherein
the preset optimal selection policy is a maximum value selection policy, and
the selecting an optimal energy optimization value from the set of the energy optimization values according to the preset optimal selection policy comprises: comparing the energy optimization values in the set of the energy optimization values, and selecting a maximum energy optimization value as the optimal energy optimization value.

5. The method according to any one of claims 1 to 4, wherein
an energy optimization value is an energy accumulated value or an energy average value.

6. The method according to claim 1, further comprising: loading a determined optimal codebook to an AAU system for running.

7. An apparatus for optimizing coverage of a millimeter wave system, wherein the apparatus is applied to the method for optimizing coverage of a millimeter wave system according to any one of claims 1 to 6, and comprises: a statistics module, a selection module and a determination module,
the statistics module is configured to count energy optimization values of received optimal beams from all UEs in a cell under all codebooks to obtain a set of energy optimization values of all the codebooks;
the selection module is configured to select an optimal energy optimization value from the set of the energy optimization values according to a preset optimal selection policy; and
the determination module is configured to determine a codebook corresponding to the optimal energy optimization value as an optimal codebook in a current scenario.

8. An electronic device, comprising: a processor, a memory and a computer program stored on the memory and executed on the processor, wherein when the computer program is executed by the processor, the step of the method for optimizing coverage of a millimeter wave system according to any one of claims 1 to 6 is implemented.

9. A storage medium storing a program thereon for the method for optimizing coverage of a millimeter wave system, wherein when the program for the method for optimizing coverage of a millimeter wave system is executed by a processor, the step of the method for optimizing coverage of a millimeter wave system according to any one of claims 1 to 6 is implemented.
